# EUROPEAN PATENT SPECIFICATION

(11) **EP 0 580 991 B1**
(45) Date of publication and mention of the grant of the patent: **26.01.2000**
(21) Application number: 93109001.3
(22) Date of filing: 04.06.1993
(51) Int. Cl.: C08L 23/28, C08G 81/02, C08K 5/47

(54) **Rubbers, rubber compounds, and rubber curing bladders having self release or low adhesion to curing or cured hydrocarbon rubbers**
Kautschuk, Gummiformmasse und nicht an vulkanisiertem oder vulkanisierendem Kohlenwasserstoff-Gummi haftende Vulkanisierbälge
Caoutchoucs, compositions de caoutchouc et vessies caoutchoucs de vulcanisation ne collant pas aux caoutchoucs hydrocarbonés vulcanisés ou vulcanisants

(30) Priority: 29.06.1992 US 906095
(43) Date of publication of application: 02.02.1994
(73) Proprietor: BRIDGESTONE CORPORATION, Tokyo 104-0031 (JP)
(72) Inventor: Graves, Daniel F., Clinton, Ohio 44216 (US); Hergenrother, William L., Akron, Ohio 44313 (US)
(74) Representative: Kraus, Walter, Dr.

(56) References cited:
- EP-A- 0 378 041
- WO-A-91/04992
- WO-A-92/02582
- WO-A-92/16587
- GB-A- 1 288 616

## Description

### FIELD OF INVENTION

Polymers useful in making curing bladders or sleeves (used primarily to manufacture pneumatic tires) are described. These polymers must have good heat stability and physical properties such that they can be inflated during use and not rupture. The polymers described are butadiene acrylonitrile copolymers.

These polymers when used in a curing bladder formulation reduce or eliminate the need for a release agent to prevent adherence of the bladder to the cured tire.

### BACKGROUND

Inflatable rubber bladders are used in machines for assembling, forming and curing pneumatic tires. These bladders are typically made from isobutylene rubbers. Isobutylene polymers are preferred over diene based polymers because they are more resistant to oxidation at the cure temperatures required for forming tires. Adhesion of the cured tires to the rubber bladders is generally avoided by applying a silicone-based lubricant either to the bladder or the tire components that are to be in contact with the bladder.

The need to apply a lubricant (also called dope) to the bladder tire interface slows the tire manufacturing process. Excessive lubricant can discolor the tires or contaminate other surfaces where bonding is desired. Insufficient lubricant results in bonding at the tire bladder interface. This can cause defects in the tire, roughens the bladder surface, or can promote bladder failure.

Bladders are used in presses to press the tread and sidewall regions of the tire outwardly against the mold surface during tire manufacturing. These bladders are filled with a heated fluid (preferably steam) to help speed the curing process of the tire.

Other inflatable bladders and sleeves have found uses in other rubber forming and curing processes. These similarly suffer from the necessity of supplying a lubricant at the interface between the bladder and the hydrocarbon component to be cured.

WO 92/16587 relates to a composition suitable for use in producing mold curing elements. The composition comprises a halogen-containing copolymer of C₄ to C₇ isomonoolefin and a para-alkylstyrene; a filler such as carbon black, a process oil and a curing agent. The mold curing element may be a tire curing element selected from the group consisting of a curing bag, a curing bladder and a curing diaphragm.

### SUMMARY OF THE INVENTION

Polymers and molded polymer compositions are described having reduced natural adhesion (non-stick characteristics) to tire compounds and other hydrocarbon polymer compositions. Inflatable curing bladders made from these polymers require less interface lubricant or can be used without interface lubricant when used in molding and curing hydrocarbon polymer compositions such as pneumatic tires. The polymers used to make the bladders have polar components in the backbone that contribute to this tendency to not adhere to the hydrocarbon polymers.

### DETAILED DESCRIPTION OF THE INVENTION

Suitable polymers useful for this invention are butadiene-acrylonitrile copolymers. These copolymers can be made by a variety of polymerization methods, but free radical emulsion polymerized polymers are preferred. The weight percent acrylonitrile in these copolymers is from 18 to 55, desirably 25 to 45, and preferably 30 to 40, with the residual being butadiene. Butadiene-acrylonitrile heat stability is improved with a special antioxidant heat stabilizers such as the zinc salt of 2-mercaptobenzothiazole (Zetax) to keep the polymer from degrading at the use temperature. Such compounds are used at the concentration of 0.25 to 2 parts per 100 parts by weight hydrocarbon rubber. The average molecular weight of the polymer for this invention is from 50,000 to 500,000, and desirably is from 80,000 to 250,000.

To be useful as curing bladders, all the above referenced copolymers must be formulated into rubber compounds with good elasticity, high strength, and good property retention after aging or use at high temperatures such as 100°C to 150°C. Typical formulations for these compounds are well known to the art. High structure reinforcing carbon blacks are used in this invention to give higher modulus and better abrasion resistance. These carbon blacks are desirably high structure blacks having calculated ultimate particle sizes from 20 to 40 nanometer diameter and Iodine Numbers by ASTM methods of 60 to 160 mg/g. Oils are used to extend the polymers. These oils can be paraffinic, naphthenic, or aromatic. Antioxidants are used to prevent oxidative crosslinking or chain degradation of the polymers. The antioxidants effective in these compositions include paraphenylenediamines, hindered phenols, and polymerized quinolines. Commercial EPDM, hydrogenated SBR, brominated p-methylstyrene-isobutylene, SAN/EPDM blends or grafts, and hydrogenated PBD polymers can be blended with the copolymers used in this invention. EPDM and the hydrogenated rubbers generally gives a composition higher resistance to oxidation in that these polymers have low residual unsaturation in the polymer backbone. Accelerators and curatives will be discussed individually for each of the copolymers.

The compounds are formulated to give an ultimate tensile strength of 10.34 MPa (1500 psi) or more, a 300 percent modulus value of 3.45 to 6.90 MPa (500 to 1000 psi), a Shore A hardness of 55 to 70, and desirably of 60 to 65. It is also desirable that the tear strength at 170°C be in excess of 0.69 MPa (100 psi).

The butadiene-acrylonitrile rubber can be compounded with typical compounding ingredients. A specific example is given in Table I. The butadiene-acrylonitrile is from 20 to 100 weight percent, desirably 50 to 100 weight percent, and preferably 75 to 100 weight percent of the rubber used in a molded article.

The above-referenced compounded rubbery polymers (either with polar components in the polymer backbone or with polar polymer grafts on hydrocarbon polymer backbones) can be formed into curing bladders in a transfer mold. The typical procedure for molding is that the compound is extruded as a slug, bar, etc. The extrudate is mechanically spliced forming a ring. The ring of extrudate is put into the transfer mold where the compound is formed into a barrel shape of a curing bladder and crosslinked. Transfer molding temperatures are 171-199°C (340-390°F) for 20-25 minutes with pressures of 10.34 MPa (1500 to 13.80 MPa 2000 psi).

As explained previously the rubber polymers are mixed in a Banbury or other internal mixers, or two roll mill with the fillers, plasticizers, oils, antioxidants, acid scavengers, and polar polymers until homogeneous. If a grafting reaction between a hydrocarbon backbone and the polar polymers is desired, it can be accomplished during this mixing step or prior to this step in a separate reaction.

After the initial blend is homogenous, then the curing agents are added. This is a standard compounding technique found in any basic rubber compounding book. The mixing temperatures subsequent to adding the curing agents are controlled to prevent premature crosslinking during the mixing stage. The compounded rubber stock is characterized regarding cure times by running a disc type curemeter plot at the desired curing temperature. Additional additives such as scorch inhibitors or cure accelerators can be added depending on the particular molding equipment used. The physical properties reported herein are from crosslinked molded articles for ASTM D-412 or molded sheets prepared for the peel force test.

The peel force test was designed to measure the adherence of a typical sulfur cured butyl rubber tubeless tire innerliner stock cured in physical contact under pressure to a rubber curing bladder candidate. Two sheets, one of the experimental cured bladder candidate, the second of uncured conventional butyl rubber tubeless tire innerliner compound, are molded for 20 minutes at 171°C (340°F) under 0.69 MPa (1000 psi) pressure as a laminate. A small piece of Mylar® is used along one edge of the laminate between the two compounds so as to form a lip of non-adhered compounds to serve as clamping points for the peel test. After curing, the sample is removed from the press and the force to peel the two materials from each other, bladder candidate from innerliner compound, is measured by 180° peel test while the samples are still hot. Typical butyl rubber curing bladder materials have peel forces of in excess of 1786 kg/m (100 pounds per inch (ppi)) and the peel surface is characterized by cohesive failure rather than interfacial failure. Cohesive failure means the two materials are well bonded such that the failure occurs in one of the compounds (internal tearing of the compound) rather than at the interface between the two compounds. This is why a lubricant or dope is required for conventional butyl rubber curing bladders.

When curing bladders are made from the polar polymers or polymers with polar grafts disclosed in this specification, they have low adhesion or no adhesion to the innerliner compound when tested accordingly to the peel test. The peel force is less than 357 kg/m (20 lbs./in.), desirably less than 119 kg/m (3 lbs./in.) and preferably less than 40 kg/m (1 lbs./in.) A low peel force for the purpose of this application is less than 119 kg/m (3 lbs./in. It is suggested that the more polar surface of the disclosed curing bladder compounds are less compatible with the innerliner compound and this causes less adhesion of the compounds after curing of the innerliner compound.

The following examples serve to illustrate how the above listed polymers can be compounded into useful materials having low adhesion to curing or cured hydrocarbon formulations.

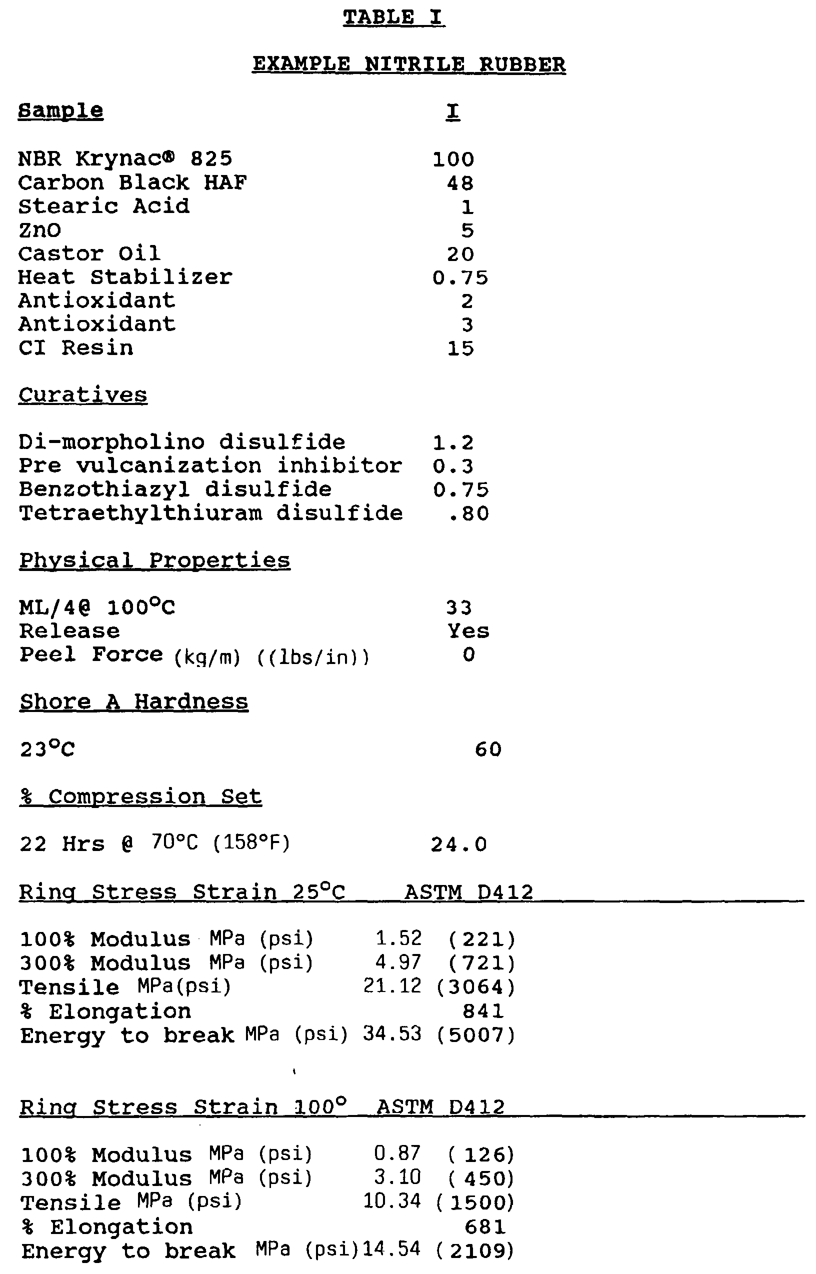

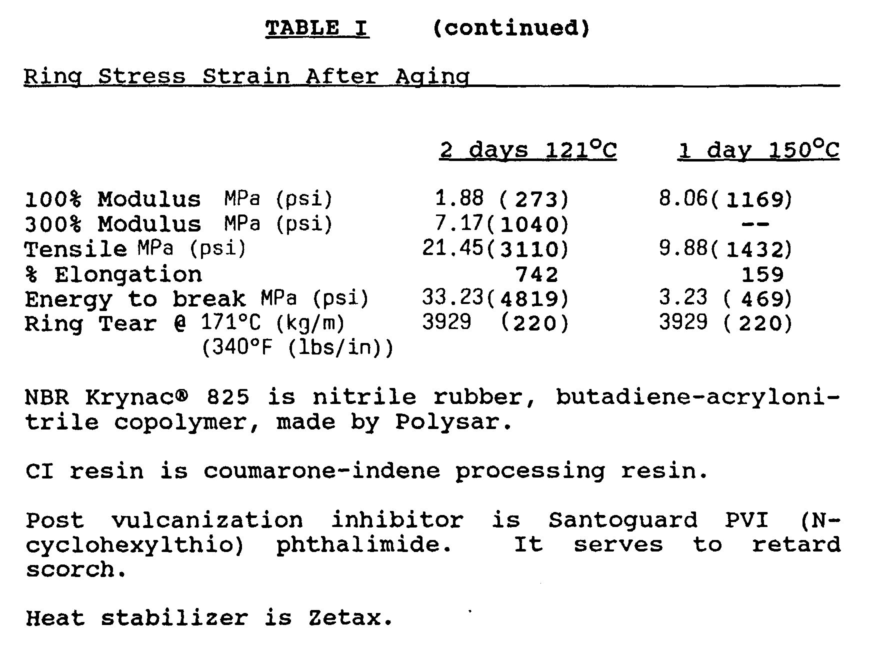

**TABLE II**

| **CONTROL EXAMPLE OF BUTYL RUBBER** | |
|---|---|
| **Sample** | **J** |
| Butyl Rubber | 95 |
| Carbon Black | 48 |
| Stearic Acid | 0 |
| ZnO | 8 |
| Antioxidant | 0 |
| Castor Oil | 8 |

| Curatives | |
|---|---|
| Heat Reactive Phenolic Resin | 9.75 |
| Neoprene | 5 |

| Physical Properties | |
|---|---|
| ML/4 @ 100°C | 75 |
| Release | No |
| Peel Force kg/m (lbs/in) | >1786(>100) rubber failure |
| Ring Tear @ 171°C (kg/m) (340°F (lbs/in)) | 3929 (220) |
| Heat reactive phenolic resin is actually added with the carbon black and other ingredients before the final curative, which is neoprene rubber. Neoprene rubber serves to activate the cure system. | |

Sample I of nitrile rubber (Table I) showed excellent release and no adhesion in the peel test. The physical properties and heat aging are acceptable up to 120°C.

The control sample J of butyl rubber (Table II) without any polar polymers or polar polymers grafted to hydrocarbon polymer backbones showed no release from a butyl rubber innerliner in the peel force test. The peel force was in excess of 1786 kg/m (100 lbs/in) and showed tearing in the rubber rather than at the interface between the two compounds.

The utility of these disclosed copolymers having low adhesion to hydrocarbon rubbers like butyl rubber innerliners is to make curing bladders, sleeves, or other shaped polymer products especially those shaped products to be used in molding, shaping and curing hydrocarbon rubber compounds. The disclosed copolymers have low adhesion to the cured hydrocarbon rubbers saving the necessity of applying lubricants to the interface between the molding device (such as a curing bladder) and the hydrocarbon rubber compound to be cured. The shaped articles and curing bladders or sleeves disclosed are useful in assembling, forming, and curing hydrocarbon based rubber materials.

## Claims

1. A curing press for hydrocarbon based rubbers of the type which uses an inflatable bladder or sleeve, wherein the bladder or sleeve material is made from at least one butadiene-acrylonitrile polymer having a peel force less than 357 kg/m (20 lbs/in) and having an ultimate tensile strength of 10.34 MPa (1500 psi) or more and a 300 percent modulus of 3.45-6.90 MPa (500-1000 psi).

2. A curing press according to claim 1, wherein said one or more butadiene-acrylonitrile polymers are stabilized with the zinc salt of 2-mercaptobenzothiazole.

3. A curing press according to claim 1, wherein the acrylonitrile content of said one or more butadiene acrylonitrile polymers is from 30 to 40 weight percent and wherein the tensile strength after aging 2 days at 121°C is at least 10.34 MPa (1500 psi).

## Patentansprüche

1. Härtungs- bzw. Vulkanisationspresse für Kautschuke auf Kohlenwasserstoffbasis von dem Typ, bei dem ein aufblasbarer Bombierschlauch oder eine Muffe bzw. Buchse verwendet wird, wobei das Material des Bombierschlauchs oder der Muffe bzw. Buchse aus mindestens einem Butadienacrylnitrilpolymeren mit einer Abzugskraft von weniger als 357 kg/m (20 lbs/in) und einer Zugfestigkeit von 10,34 MPa (1500 psi) oder mehr und einem 300 %-Modul von 3,45-6,90 MPa (500-1000 psi) hergestellt ist.

2. Härtungs- bzw. Vulkanisationspresse nach Anspruch 1, dadurch **gekennzeichnet,** daß das eine oder die mehreren Butadienacrylnitrilpolymere mit dem Zinksalz von 2-Mercaptobenzothiazol stabilisiert ist bzw. sind.

3. Härtungs- bzw. Vulkanisationspresse nach Anspruch 1, dadurch **gekennzeichnet,** daß der Acrylnitrilgehalt des einen oder der mehreren Butadienacrylnitrilpolymeren 30 bis 40 Gew.-% beträgt, wobei die Zugfestigkeit nach zweitägiger Alterung bei 121°C mindestens 10,34 MPa (1500 psi) beträgt.

## Revendications

1. Presse de vulcanisation pour des caoutchoucs à base hydrocarbonée du type qui utilise une vessie ou un manchon gonflable, dans laquelle la matière de la vessie ou du manchon est constituée d'au mains un polymère butadiène-acrylonitrile ayant une force d'arrachement inférieure à 357 kg/m (20 lb/in) et ayant une résistance à la rupture égale ou supérieure à 10,34 MPa (1500 psi) et un module a 300 pour cent compris dans l'intervalle de 3,45 à 6,90 MPa (500 a 1000 psi).

2. Presse de vulcanisation suivant la revendication 1, dans laquelle le ou les polymères butadiène-acrylonitrile sont stabilisés avec le sel de zinc de 2-mercaptobenzothiazole.

3. Presse de vulcanisation suivant la revendication 1, dans laquelle la teneur en acrylonitrile du ou des polymères butadiène-acrylonitrile est comprise dans l'intervalle de 30 à 40 pour cent en poids et la résistance à la traction, après vieillissement pendant 2 jours a 121°C, est au mains égale a 10,34 MPa (1500 psi).
